# EUROPÄISCHE PATENTANMELDUNG

(11) **EP 1 724 247 A1**
(43) Veröffentlichungstag der Anmeldung: **22.11.2006**
(21) Anmeldenummer: 05010916.4
(22) Anmeldetag: 19.05.2005
(51) Int. Cl.: C05G 5/00, C05G 3/00, C05C 9/02, C05F 1/00, C05F 5/00, C05D 9/00

(54) **Verfahren zur Herstellung eines Düngemittelgranulates**

(71) Anmelder: Hauert HBG Dünger AG, Grossaffoltern (CH)
(72) Erfinder: Hauert, Philipp, 2502 Biel (CH); Hauert, Hans-Jürg, 3257 Grossaffoltern (CH)
(74) Vertreter: Wunderlich, Rainer

(57) **Zusammenfassung**

Die Erfindung betrifft ein Verfahren zur Herstellung eines Düngemittelgranulates mit zumindest einer anorganischen Düngemittelkomponente, welche zusammen mit Wasser in einen Extruder eingeleitet, darin zu einer plastischen Masse vermischt, ausextrudiert und zum Granulat geformt wird. Eine besonders gute Bindung und Stabilität des Düngemittelgranulates wird dadurch erreicht, dass zum Bilden der plastischen Masse in den Extruder eine feinkörnige organische Düngemittelkomponente eingeleitet wird, dass die plastische Masse in Strängen ausextrudiert und unmittelbar bei Austritt aus dem Extruder zu Granulatkörpern abgelängt wird, und dass die Granulatkörper in einem noch plastischen Zustand verrundet werden.

## Beschreibung

Die Erfindung betrifft ein Verfahren zur Herstellung eines Düngemittelgranulates mit zumindest einer anorganischen Düngemittelkomponente, welche zusammen mit Wasser in einen Extruder eingeleitet, darin zu einer plastischen Masse vermischt, ausextrudiert und zu Granulat geformt wird.

Die Herstellung von mineralischen Düngemitteln als Granulat ist im Stand der Technik hinlänglich bekannt. Gegenüber flüssigen oder feinpulvrigen Düngemitteln haben Düngemittelgranulate Vorteile hinsichtlich Transport, Lagerung und Handhabung. Granulate sind daher eine der gebräuchlichsten Anwendungsformen von Düngemitteln.

An die Herstellung von Düngemitteln in Granulaten werden verschiedene Anforderungen gestellt. Zum einen soll das Granulat möglichst formgenau herstellbar sein. Eine möglichst gleiche Größe stellt definierte, gleichmäßige Zerfallseigenschaften sicher, was für eine gezielte Nährstoffzuführung notwendig ist. Da zudem Überkorn die maschinelle Ausbringung des Düngemittels beeinträchtigen kann, muss dieses nach der Granulatherstellung vom Gutkorn getrennt und gegebenenfalls dem Produktionsprozess rückgeführt werden. Weiterhin wird eine gute Bindung innerhalb des Granulatkornes verlangt.

Nach längerer Lagerung und nach mehreren Transportvorgängen können bei Düngemittelgranulaten nicht unerhebliche Staubverluste auftreten. Derartige Staubverluste sind wirtschaftlich nachteilig, da diese Düngemittelanteile sehr schnell durch Wind und Wasser entfernt werden und für eine längerfristige Nährstoffversorgung der Pflanzen nicht mehr zur Verfügung stehen. Darüber hinaus können die sich beim Ausbringen des Düngemittels ergebenden Stäube in der Luft unerwünschte Folgen für die Umwelt, etwa beim Einatmen durch Personen und Tiere, ergeben.

Der Erfindung liegt die **Aufgabe** zugrunde, ein Verfahren zur Herstellung eines Düngemittelgranulates anzugeben, welches besonders staubarm ist.

Die Aufgabe wird nach der Erfindung durch ein Verfahren mit den Merkmalen des Anspruchs 1 gelöst. Bevorzugte Ausführungsformen der Erfindung sind in den abhängigen Ansprüchen angegeben.

Das erfindungsgemäße Verfahren ist dadurch gekennzeichnet, dass zum Bilden der plastischen Masse in den Extruder eine feinkörnige organische Düngemittelkomponente eingeleitet wird, dass die plastische Masse in Strängen ausextrudiert und unmittelbar bei Austritt aus dem Extruder zu Granulatkörpern abgelängt wird und dass die Granulatkörper in einem noch plastischen Zustand verrundet werden.

Ein Grundgedanke der Erfindung besteht darin, durch die Verwendung einer speziellen feinkörnigen organischen Düngemittelkomponente eine besonders gute Bindung und Struktur im Düngemittelkorn zu erzeugen. Dies wird insbesondere durch die Verwendung von organischen Materialien mit einem großen Anteil Stärke und/oder Proteinen erreicht. Diese tendieren in Gegenwart von Wasser bei intensiver mechanischer Vermischung zur Vernetzung. In Gegenwart anorganischer Düngemittelkomponenten ergeben sich Wechselwirkungen, welche zu einer hohen Stabilität und Abriebsfestigkeit des Granulates führen.

Eine besonders gute Bindung und Struktur ergibt sich nach der Erfindung, wenn als organische Düngemittelkomponente Traubentrester, Malztrester und/oder pflanzliches Protein, beispielsweise Maisprotein, und/oder tierisches Protein, beispielsweise Federmehl und/oder Hornmehl, verwendet wird. Die Verwendung dieser natürlichen Reststoffe, welche in einem weitgehend trockenen, fein gemahlenen Zustand in den Extruder eingeleitet werden, führen zu einer ausgezeichneten Festigkeit, ohne dass ein zusätzliches Bindemittel vorgesehen werden muss. Zudem sind diese natürlichen Rohstoffe restlos zersetzbar, wobei diese selbst als Pflanzennährstoff dienen. Nach der Erfindung ist es bevorzugt, dass als anorganische Düngemittelkomponente mineralische Salze, insbesondere zur Bildung eines NPK-Düngemittels, und/oder Methylen-Harnstoff eingesetzt werden.

Hinsichtlich der mineralischen Salze sind die Komponenten insbesondere aus der nachfolgend genannten Gruppe ausgewählt. Diese Gruppe besteht aus Ammoniumnitrat, Ammoniummolybdat, Ammoniumsulfat, Borsäure, Calciumnitrat, Calciumsulfat, Calciumphosphat, Cobaltsulfat, Colemanit, Diammoniumphosphat, Dicalciumphosphat, Eisensulfat, Eisensulfatmonohydrat, Eisensulfatheptahydrat, Eisen-EDTA, Harnstoff, Kaliumnitrat, Kaliumsulfat, Kaliumchlorid, Kaliumhydrogenphosphat, Kieserit, Cobaltsulfat, Kupfer-EDTA, Kupfersulfat, Magnesiumsulfat, Magnesiumoxid, Magnesiumphosphat, Mangansulfat, Mangan-EDTA, Monoammoniumphosphat, Natriummolybdat, Natriumtetraborat, Tonmehl, Steinmehl, Zinksulfat und Zink-EDTA. Damit können besonders wirksame NPK-Düngemittel hergestellt werden. Die Verwendung von Methylen-Harnstoff als Düngemittelkomponente kann zu einer weiteren Erhöhung der Festigkeit und Stabilität im Düngemittelkorn beitragen.

Besonders gute Bindungs- und Stabilitätseigenschaften werden nach der Erfindung dadurch erreicht, dass die organische Düngemittelkomponente 10% bis 90% der Masse und die anorganische Düngemittelkomponente 90% bis 10% der Masse bilden.

Eine bevorzugte Ausführung der Erfindung besteht weiter darin, dass zur Herstellung der plastischen Masse 1% bis 10% Wasser, vorzugsweise 3% bis 5% Wasser, zugesetzt wird. Ein derartiger relativ geringer Wasseranteil ist ausreichend, um in einem Extruder eine ausreichende Plastizität der Masse zu erreichen. Dieser Wasseranteil wirkt bei intensiver mechanischer Vermischung, wie sie im Extruder auftritt, positiv auf die Ausbildung der Vernetzungsstrukturen, insbesondere der organischen Düngemittelkomponente aber auch der anorganischen Düngemittelkomponente. Zwischen den beiden unterschiedlichen Komponenten ergeben sich Wechselwirkungen, die die Vernetzungs- und Bindungskräfte im Düngemittelgranulatkorn erhöhen.

Eine besonders effiziente Verfahrensdurchführung wird erfindungsgemäß dadurch erreicht, dass die plastische Masse in dem Extruder auf eine Temperatur zwischen 40°C und 140°C, insbesondere zwischen 60°C bis 80°C, erwärmt wird. In diesem Temperaturbereich wird einerseits eine gute Löslichkeit der anorganischen Düngemittelkomponente, insbesondere bei Verwendung von Methylen-Harnstoff, in Wasser erreicht, während andererseits die thermische Belastung im Extruder gering bleibt. Es ergibt sich somit eine schonende Behandlung der organischen Düngemittelkomponente, so dass diese im Extruder thermisch nicht zerstört wird.

Eine besonders starke Verbesserung der Staubarmut wird erfindungsgemäß dadurch erreicht, dass die plastische Masse bei Austritt aus dem Extruder und beim Ablängen unter Umgebungsdruck noch definiert expandiert. Hierzu werden abhängig von den in den Extruder eingeleiteten Komponenten und insbesondere deren elastischen Eigenschaften der Druck und die Temperatur sowie auch der Wassergehalt so eingestellt, dass die plastische Masse beim Austritt aus dem Extruder unter Umgebungsdruck und auch noch nach dem Ablängen expandiert. Durch diese Expansion kann das Volumen des Granulatkörpers vorzugsweise zwischen 5% und 30% zunehmen. Diese Expansion beim Austreten und auch noch beim Ablängen hat zur Folge, dass die sich eigentlich bildende zylindrische Körperform mit den spitzen Schnittkanten zu einer eher runden oder ovalen Form mit gerundeten Kanten abgemildert wird. Dies fördert den Vorgang der nachträglichen Verrundung. Auf diese Weise können an den fertigen Düngemittelgranulaten scharfe oder vorstehende Kanten weitgehend vermieden werden, welche besonders anfällig für Abrieb und damit Staub bildend sind.

Gemäß der Erfindung wird die plastische Masse durch eine Lochplatte mit einer Vielzahl von Löchern extrudiert, welche einen Durchmesser von vorzugsweise zwischen 0,5 mm und 5 mm aufweisen. Das Granulieren kann mittels eines der Lochplatte zugeordneten rotierenden Schneidmessers erfolgen. Die Rotationsgeschwindigkeit des Schneidmessers kann dabei so eingestellt sein, dass sich eine Granulatlänge von vorzugsweise 0,5 mm bis 5 mm bildet. Vorzugsweise sollte die Länge der zylindrischen Granulatkörper etwa dem Körper des Zylinderkörpers entsprechen. Bei einem weitgehend gleichen Längen- und Durchmesserverhältnis lassen sich besonders leicht runde Granulatkörper herstellen, welche eine besonders hohe Abriebsfestigkeit aufweisen.

Grundsätzlich kann nach dem Austritt aus dem Extruder und dem Ablängen des Granulatkornes dieses unmittelbar in eine Trommel zum Verrunden zugeführt werden. Nach der Erfindung ist es jedoch vorteilhaft, dass nach dem Austritt aus dem Extruder und vor dem Verrunden die plastische Masse abgekühlt und/oder getrocknet wird. Auf diese Weise kann sowohl der Wassergehalt nochmals reduziert und die Plastizität vor der abschließenden Formgebung vermindert werden. Dies verringert auch die Gefahr des Verbackens oder Verklebens einzelner Granulatkörner in einer Verrundungsvorrichtung.

Insgesamt kann mit dem erfindungsgemäßen Verfahren ein Düngemittelgranulat mit hoher Festigkeit und Stabilität erzeugt werden. Hierdurch können Staubverluste bei Transport, Lagerung und Ausbringung des Düngemittels in erheblichem Maß verringert werden.

## Patentansprüche

1. Verfahren zur Herstellung eines Düngemittelgranulates mit zumindest einer anorganischen Düngemittelkomponente, welche zusammen mit Wasser in einen Extruder eingeleitet, darin zu einer plastischen Masse vermischt, ausextrudiert und zu Granulat geformt wird,
**dadurch gekennzeichnet ,**
**dass** zum Bilden der plastischen Masse in den Extruder eine feinkörnige organische Düngemittelkomponente eingeleitet wird,
**dass** die plastische Masse in Strängen ausextrudiert und unmittelbar bei Austritt aus dem Extruder zu Granulatkörpern abgelängt wird, und
**dass** die Granulatkörper in einem noch plastischen Zustand verrundet werden.

2. Verfahren nach Anspruch 1,
**dadurch gekennzeichnet ,**
**dass** als organische Düngemittelkomponente Traubentrester, Malztrester und/oder pflanzliches Protein, insbesondere Maisprotein, und/oder tierisches Protein, insbesondere Horn- und/oder Federmehl, verwendet wird.

3. Verfahren nach Anspruch 1 oder 2,
**dadurch gekennzeichnet ,**
**dass** als anorganische Düngemittelkomponenten mineralische Salze, insbesondere zur Bildung eines NPK-Düngemittels, und/oder Methylen-Harnstoff eingesetzt werden.

4. Verfahren nach einem der Ansprüche 1 bis 3,
**dadurch gekennzeichnet ,**
**dass** die organische Düngemittelkomponente 10% bis 90% der Masse und die anorganische 90% bis 10% der Masse bildet.

5. Verfahren nach einem der Ansprüche 1 bis 4,
**dadurch gekennzeichnet ,**
**dass** zur Herstellung der plastischen Masse 1% bis 10% Wasser, vorzugsweise 3% bis 6% Wasser, zugesetzt wird.

6. Verfahren nach einem der Ansprüche 1 bis 5,
**dadurch gekennzeichnet ,**
**dass** der Düngemittelgrundstoff in dem Extruder auf eine Temperatur zwischen 40°C bis 140°C, insbesondere zwischen 60°C bis 80°C, erwärmt wird.

7. Verfahren nach einem der Ansprüche 1 bis 6,
**dadurch gekennzeichnet ,**
**dass** die plastische Masse bei Austritt aus dem Extruder und beim Ablängen unter Umgebungsdruck noch definiert expandiert.

8. Verfahren nach einem der Ansprüche 1 bis 7,
**dadurch gekennzeichnet ,**
**dass** nach einem Austritt aus dem Extruder und vor dem Verrunden die plastische Masse abgekühlt und/oder getrocknet wird.
